# Europäisches Patentamt
# European Patent Office
# Office européen des brevets

(19)

(11) Numéro de publication : **0 053 052**
**B1**

(12)

# FASCICULE DE BREVET EUROPÉEN

(45) Date de publication du fascicule du brevet :
09.01.85

(51) Int. Cl.⁴ : **G 01 B  9/021**

(21) Numéro de dépôt : **81401649.9**

(22) Date de dépôt : **20.10.81**

(54) **Dispositif d'interférométrie pour la visualisation en temps réel des déformations de structures vibrantes.**

(30) Priorité : 25.11.80 FR 8024966

(43) Date de publication de la demande :
02.06.82 Bulletin 82/22

(45) Mention de la délivrance du brevet :
09.01.85 Bulletin 85/02

(84) Etats contractants désignés :
DE GB NL

(56) Documents cités :
FR-A- 2 385 079
FR-A- 2 416 452
OPTICS LETTERS, volume 4, no. 1, janvier 1979, NEW YORK (US) J. HUIGNARD et al. "Phase-conjugate wavefront generation via real-time holography in Bi12SiO20 crystals", pages 21-23
OPTICS LETTERS, volume 5, no. 10, octobre 1980, NEW YORK (US) J. HUIGNARD et al. "Speckle-free imaging in four-wave mixing experiments with Bi12SiO20 crystals", pages 436-437
OPTICS COMMUNICATIONS, volume 34, no. 1, juillet 1980, AMSTERDAM (NL) A. MARRAKCHI et al. "Application of phase conjugation in Bi12SiO20 crystals to mode pattern visualisation of diffuse vibrating structures", pages 15-18

(73) Titulaire : THOMSON-CSF
173, Boulevard Haussmann
F-75379 Paris Cedex 08 (FR)

(72) Inventeur : Huignard, Jean-Pierre
THOMSON-CSF SCPI 173, bld Haussmann
F-75360 Paris Cedex 08 (FR)
Inventeur : Herriau, Jean-Pierre
THOMSON-CSF SCPI 173, bld Haussmann
F-75360 Paris Cedex 08 (FR)
Inventeur : Marrakchi El Fellah, Abdellatif
THOMSON-CSF SCPI 173, bld Haussmann
F-75360 Paris Cedex 08 (FR)

(74) Mandataire : Wang, Pierre et al
THOMSON-CSF SCPI 173, Bld Haussmann
F-75379 Paris Cedex 08 (FR)

Jouve, 18, rue St-Denis, 75001 Paris, France

## Description

L'invention se rapporte aux dispositifs de visualisation, par interférométrie holographique en temps réel, des déformations de structures vibrantes, ou déformables.

Dans de nombreux secteurs d'activités, il est utile de pouvoir opérer un contrôle non destructif de pièces mécaniques placées sous contrainte. Dans le cas de déformations lentes, il est connu d'utiliser des dispositifs mettant en œuvre l'holographie classique, l'observation étant rendue possible par l'effet de mémoire propre aux milieux holographiques : l'enregistrement de deux fronts d'onde successifs avec un même faisceau de référence et la restitution par ce faisceau de référence des franges enregistrées permet la création d'une figure d'interférence correspondant aux déformations. La localisation des franges est directement liée aux déformations survenues entre les états enregistrés. On utilise, comme milieu d'enregistrement des supports photographiques de haute résolution, mais ils nécessitent un développement chimique et un repositionnement très précis, et il n'est pas possible de suivre les déformations des structures, en particulier lorsqu'il s'agit de structures vibrantes.

Pour apporter une solution à ce problème, il est connu d'utiliser, comme milieu d'enregistrement, des matériaux électro-optiques photosensibles tels que BSO (oxyde de bismuth et de silicium) ou BGO (oxyde de bismuth et de germanium). Dans de tels matériaux, le réseau de franges créé par l'interférence du front d'onde provenant de l'objet et du front d'onde de référence induit, en temps réel, au temps d'inscription du matériau près, un réseau de strates d'indice, constituant un hologramme caractéristique du front d'onde objet. Il diffracte une partie de l'énergie du front d'onde de référence incident selon une onde diffractée dont le front d'onde est isomorphe du front d'onde objet. Si on dispose un miroir perpendiculairement au trajet de l'onde de référence transmise par le cristal, pour renvoyer cette onde de référence sur le cristal, le réseau de strates d'indice inscrit dans le cristal donne naissance, à partir de ce faisceau de référence réfléchi, à une onde conjuguée de l'onde objet.

Ainsi, différents articles de l'art antérieur, notamment les articles de J. P. Huignard dans Optics Letters de janvier 1979 et d'octobre 1980 intitulés respectivement « Phase-conjugate wavefront generation via real-time holography in $Bi_{12}Si\,O_{20}$ crystals, » et « Speckle-free imaging in fourwave mixing experiments with $Bi_{12}Si\,O_{20}$ crystals », concernent différents cas particuliers de réalisation dans une configuration d'interférométrie quatre ondes dans laquelle on opère par rétroréflexion où l'on sépare par une lame semi-transparente le faisceau porteur de l'interférogramme du faisceau objet incident. Le premier article explicite la théorie de cette configuration, le second donne une réalisation permettant de réduire le speckle de l'image par intégration de l'intensité de N images cohérentes indépendantes. Le brevet français FR-A-2 416 452 a lui aussi trait à cette configuration d'interférométrie quatre ondes : il considère une propagation des différents rayonnements guidée dans un câble optique.

Une telle propriété a été appliquée à la réalisation d'un dispositif de visualisation, par interférométrie holographique, des déformations de structures déformables. Ce dispositif fait l'objet de la demande de brevet FR-A-2 385 079.

Ce dispositif est prévu soit pour mettre en évidence la déformation lente d'un objet entre deux expositions, soit pour étudier les vibrations rapides d'un objet ou d'une partie d'un objet. Dans ce dernier cas, si le temps d'exposition du matériau d'enregistrement est grand par rapport à la période de vibration et si l'amplitude maximale $\Delta e$ de la déformation ne dépasse pas quelques dizaines de fois la longueur d'onde $\lambda$ du rayonnement, l'image obtenue correspond alors à l'image de l'objet à analyser modulée par des franges noires, correspondant aux zéros de la fonction de Bessel $J_0^2[(4/\pi)\pi\Delta e]$.

Ce dispositif fonctionne par rétroréflexion de l'onde référence, génération du front d'onde conjugué dans le matériau d'enregistrement, et séparation de ce front d'onde conjugué du front d'onde objet incident au moyen d'une lame semi-transparente. L'onde de référence passe ainsi deux fois dans le cristal, et compte tenu des coefficients d'absorption aux longueurs d'onde utilisées, autour de 500 nm, il en résulte une épaisseur optimale de matériau, de l'ordre de 2 mm.

Mais un tel dispositif ne permet pas l'observation d'interférogrammes d'objets vibrants de dimensions supérieures à 6 ou 7 cm. La limitation essentielle est l'énergie disponible dans le plan de l'image générée par le front d'onde conjugué. Cette énergie est celle de la fraction de faisceau de référence rétroréfléchi et diffracté par le réseau d'indice photo-induit, et le rendement de diffraction est d'autant plus élevé que le taux de modulation m des franges est plus grand, il est en fait proportionnel au carré de m.

Or le taux de modulation des franges dépend du rapport des faisceaux interférants. En pratique, dans l'application envisagée, ce rapport est de l'ordre de $10^{-3}$ à $10^{-4}$, ce qui correspond à un taux de modulation des franges extrêmement faible, de l'ordre de $2.10^{-2}$. Par rapport à un taux de modulation de 1, l'énergie disponible dans l'image est beaucoup plus faible, d'un facteur $4.10^{-4}$. Une autre conséquence du faible taux de modulation est que le temps d'inscription est plus long. Pour obtenir des interférogrammes d'objets diffusants, il faut de plus se placer dans les conditions optimales, en ce qui concerne la qualité du cristal, la planéité de l'onde de référence, des faces du cristal...

On a cherché à pallier ces inconvénients pour obtenir des interférogrammes d'objets 3-D de grande dimension sans pour cela rendre indispensable la perfection des conditions opératoires, en utilisant les phénomènes de couplage d'ondes dans les supports photosensibles et épais tels que le monocristal BSO.

Physiquement, le couplage d'onde se traduit par un transfert d'énergie notable du faisceau référence vers le faisceau objet après traversée du cristal. L'intensité du faisceau objet directement transmis est augmentée, en pratique, d'un facteur 2 à 3 en présence du faisceau de référence qui agit, dans ces conditions, comme une onde de pompe.

On peut donc, dans ces conditions, percevoir l'interférogramme de l'objet sur le trajet du faisceau objet émergeant du milieu d'enregistrement, sans être trop gêné par le rayonnement directement transmis par l'objet, ce qui apporte une simplification notable du dispositif par la suppression des obturateurs ou des miroirs indispensables dans le dispositif de l'art antérieur fonctionnant par génération du front d'onde conjugué.

L'invention a précisément pour objet un dispositif d'interférométrie pour la visualisation en temps réel des déformations d'une structure vibrante, comprenant un matériau d'enregistrement électro-optique photosensible d'une certaine épaisseur dans lequel est enregistré en volume, en temps réel à une constante de temps près caractéristique du matériau, un hologramme interférométrique composé d'un réseau fixe de strates d'indice traversant ladite épaisseur et correspondant aux déformations de cette structure vibrante, à partir de l'interférence dans le volume du matériau d'un rayonnement objet incident diffusé par la structure vibrante à partir d'un rayonnement d'éclairage issu d'une source cohérente et d'un rayonnement de référence qui lui est cohérent, et des moyens de visualisation détectant en transmission directe l'hologramme interférométrique de la structure vibrante enregistré dans le matériau sur un faisceau émergeant du matériau, caractérisé en ce que ce faisceau émergeant comprend un faisceau porteur de l'hologramme interférométrique et un faisceau correspondant à la partie du rayonnement objet incident directement transmise à travers l'épaisseur du matériau, et en ce que l'épaisseur est suffisamment grande pour que la détection en transmission directe de l'hologramme interférométrique par les moyens de visualisation soit lisible.

L'invention sera mieux comprise à l'aide de la description qui suit, illustrée par les figures annexées dont le contenu est le suivant :

les figures 1 à 4 sont des figures explicatives ;

la figure 5 est un schéma du dispositif d'interférométrie selon l'invention ;

les figures 6 à 8 sont des variantes de ce dispositif.

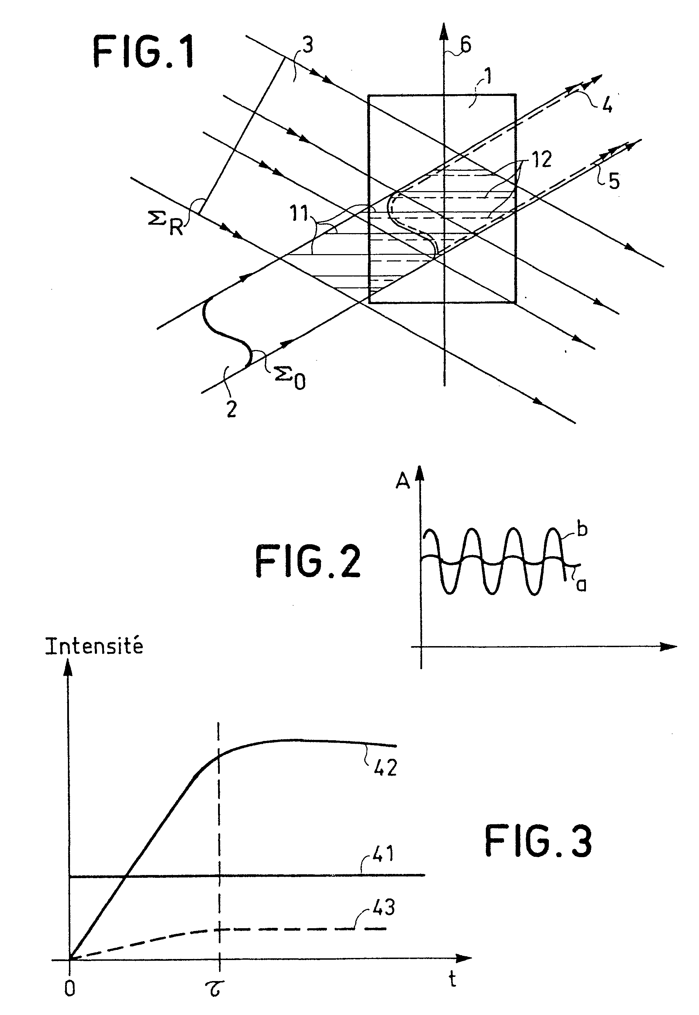

Pour aider à la compréhension du fonctionnement propre du dispositif selon l'invention, on rappelle, à l'aide des figures 1 et 2 ce qu'est le phénomène de couplage d'ondes dans un monocristal électro-optique photosensible.

On considère, sur la figure 1, le cas d'un objet diffusant fixe, de forme quelconque, d'où émane l'onde objet 2 de front d'onde $\Sigma_0$. Sur le trajet de cette onde objet 2, est disposé un monocristal épais 1, taillé dans un matériau électro-optique photoconducteur, par exemple BSO. Dans l'épaisseur du cristal, cette onde objet interfère avec une onde de référence 3, de front d'onde plan.

Le réseau de franges d'interférence 11 ainsi créé génère, en temps réel, dans le cristal, un réseau de strates d'indice 12, après un temps d'incription $\tau$. Ce réseau de strates diffracte une partie de l'énergie de l'onde de référence 3 en une onde diffractée 4 dont le front d'onde est isomorphe du front d'onde objet $\Sigma_0$.

Or, dans le cas du monocristal BSO et des autres cristaux électro-optiques photosensibles analogues, le réseau photo-induit peut être déphasé exactement de $\pi/2$ par rapport au réseau d'illumination incident, ce qui a pour conséquence que l'onde diffractée 4 est strictement superposée à l'onde objet transmise 5 ; tout se passe comme si l'onde objet transmise était enrichie d'une fraction de l'énergie de l'onde de référence. Si l'épaisseur du cristal concernée par l'interférence des deux faisceaux est grande, de l'ordre de 1 cm, le faisceau objet transmis peut être considérablement renforcé, d'un facteur 2 à 3. En effet, sur la face avant du cristal, l'interférence des deux faisceaux est responsable d'un renforcement du faisceau objet selon le processus qui vient d'être décrit, renforcement très faible, il est vrai, puisque sur cette face d'entrée le rapport des intensités des faisceaux objet et référence étant en pratique de l'ordre de $10^{-3}$ à $10^{-4}$, le taux de modulation des franges est très faible, comme montré sur la figure 2, en a.

En se propageant dans le cristal, cette onde objet renforcée, interfère à nouveau avec le faisceau de référence, ce qui accentue la modulation des franges, et crée un apport d'énergie sur le faisceau objet un peu plus important, et ainsi de proche en proche, tout au long de l'épaisseur du cristal dans laquelle les faisceaux objet et référence interfèrent, parce que le nouveau réseau photo-induit est toujours en phase avec le réseau principal, grâce au déphasage de $\pi/2$ entre le réseau d'interférence et le réseau d'indice. Sur la face de sortie, le taux de modulation des franges est plus important que sur la face d'entrée, comme représenté sur la figure 2 en b.

Ainsi, si la longueur d'interaction dans le milieu est suffisante, on peut obtenir une augmentation notable de l'intensité du faisceau objet émergeant, pratiquement d'un facteur 2 à 3. Typiquement, si on ramène à 1 la valeur de l'intensité du faisceau objet incident, le faisceau objet directement transmis sort avec une intensité de 0,1 à cause de l'absorption dans le cristal, et le faisceau diffracté selon ce faisceau objet a une intensité de 0,2, ce qui finalement, représente un transfert d'énergie notable du faisceau référence vers le signal objet.

On a représenté sur le diagramme de la figure 3 cette amplification du faisceau diffracté due au couplage d'onde dans un cristal épais, par rapport à l'intensité du faisceau diffracté dans le dispositif de l'art antérieur. Sur ce diagramme intensité en fonction du temps, la droite 41 représente l'intensité du faisceau objet directement transmis, en l'absence du faisceau pompe 3, dans le cas de la présente invention, comme dans le cas de l'art antérieur. Cette intensité est constante à partir du temps 0 où le faisceau objet incident arrive sur le cristal BSO.

La courbe 42 montre l'établissement au bout du temps $\tau$ du faisceau objet diffracté dans le cas de la présente invention, avec une intensité deux à trois fois supérieure à celle du faisceau objet directement transmis. La courbe 43 montre l'établissement du faisceau diffracté dans le cas du dispositif de l'art antérieur, avec une intensité faible par rapport à l'intensité du faisceau objet directement transmis, l'énergie de ces faisceaux diffractés étant, dans les deux cas, prélevée sur le faisceau de référence.

Le cristal 1 peut être, ou non, soumis à un champ électrique transversal, comme représenté par la flèche 6 sur la figure 1, le déphasage de $\pi/2$ entre le réseau d'interférence et le réseau d'indice s'établit automatiquement, mais l'efficacité du phénomène d'amplification est d'autant plus grande que le champ électrique appliqué est plus élevé, typiquement entre 10 et 20 kV.cm$^{-1}$.

En fait, l'inscription à saturation du réseau d'indice à partir du réseau de franges d'interférence n'est pas instantané et requiert un certain temps $\tau$, typiquement 100 ms, et il en va de même pour l'effacement du réseau. Cette propriété permet d'utiliser le phénomène de couplage d'onde dans les cristaux épais électro-optiques photosensibles pour l'étude des structures vibrantes, dont la période de vibration T est inférieure à $\tau$.

Un objet vibrant et diffusant émet à chaque instant une onde objet dont le front d'onde est différent, et plus exactement, présente des variations périodiques.

A chaque instant, avec un retard $\tau$, cette onde objet inscrit dans le cristal avec le faisceau de référence un réseau d'indice. Comme l'effacement n'est pas instantané, il y a, dans le cristal, coexistence de tous les réseaux de diffraction correspondant à tous les états de l'objet.

Avec les conditions déjà mentionnées concernant la période des vibrations, l'amplitude des déformations et la longueur d'onde du rayonnement, l'image obtenue correspond à l'image de l'objet à analyser modulée par des franges noires.

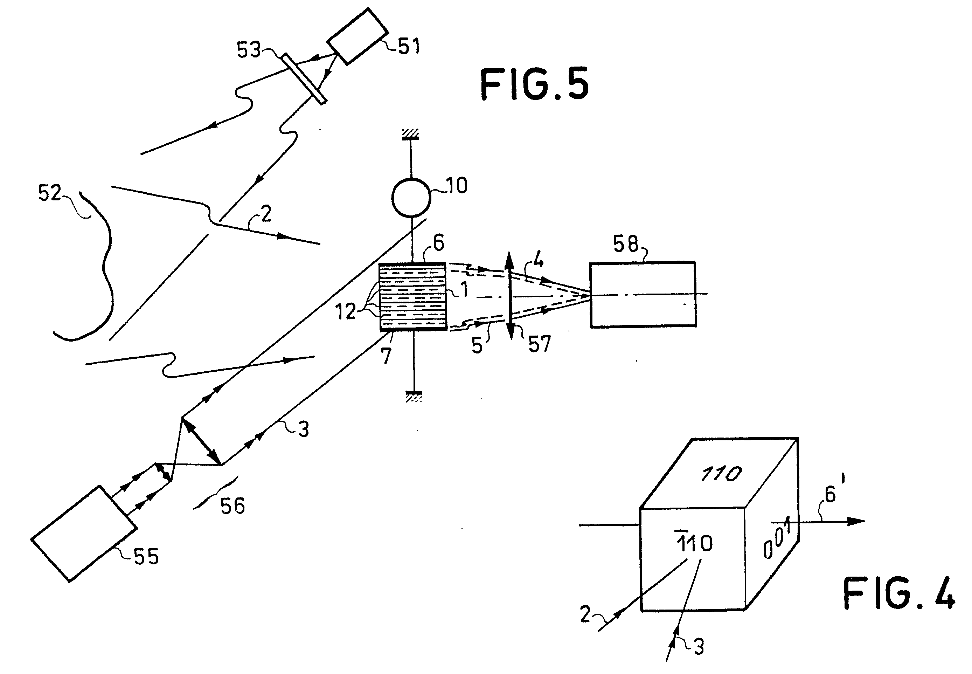

A titre indicatif, on donne ci-après des conditions de fonctionnement dans le cas d'un monocristal BSO. A la longueur d'onde $\lambda = 514$ nm, le transfert d'énergie du faisceau de référence sur le faisceau objet est notable pour une longueur d'interaction de 1 cm. L'orientation préférentielle du monocristal par rapport à la direction du champ électrique 6' est celle qui est représentée sur la figure 4, c'est-à-dire champ électrique perpendiculaire aux faces 001 du cristal. L'incidence des faisceaux sur la face 110 ou $\overline{1}$10 et qui détermine le pas des franges, est optimale autour de 20 à 30°, par exemple + 20° pour le faisceau objet, − 20° pour le faisceau de référence. Les constantes de temps $\tau$ mises en jeu pour le transfert d'énergie du faisceau de référence vers le faisceau objet sont pratiquement indépendantes du rapport des intensités des faisceaux incidents, référence et objet, $\tau$ varie de 10 à 100 ms quand ce rapport varie de 1 à 1 000. Le coefficient d'amplification obtenu sur le faisceau objet transmis est également indépendant de ce rapport dès qu'il est supérieur à 10 et est une fonction non linéaire du champ électrique appliqué au cristal lorsque ce champ dépasse une valeur de seuil de 10 kV.cm$^{-1}$. Il est par ailleurs technologiquement difficile de travailler à plus de 20 kV.cm$^{-1}$.

Un tel milieu utilisé dans les conditions qui viennent d'être décrites, est particulièrement adapté à la réalisation d'un dispositif d'interférométrie pour la visualisation des déformations de structures vibrantes.

Le schéma d'un tel dispositif est représenté sur la figure 5.

Ce dispositif est destiné à visualiser les déformations de l'objet vibrant 52, éclairé par une source de lumière 51, par l'intermédiaire d'un diffuseur 53. Cet objet 52 rediffuse un faisceau objet 2 vers le milieu d'enregistrement 1. Ce milieu est, par exemple, un monocristal de BSO, de forme cubique et de dimensions 1 cm × 1 cm × 1 cm. Ce cristal est soumis à un champ électrique de l'ordre de 10 kV.cm$^{-1}$. Pour cela, deux électrodes 6 et 7 sont disposées sur deux faces parallèles du cristal, et reliées aux deux bornes d'un générateur de tension 10.

Un faisceau de référence 3, parallèle, cohérent avec le faisceau objet 2, est formé à partir de la source lumineuse 55, par l'intermédiaire de l'élargisseur de faisceau 56 et envoyé sur le monocristal 1. Avantageusement, il couvre très largement la face d'entrée du cristal.

Sur le trajet du faisceau objet transmis 5, on dispose une lentille 57, destinée à former l'image de l'objet sur un détecteur 58, par exemple vidicon relié à un écran de télévision ou caméra polaroïd.

Selon le processus décrit précédemment, et moyennant les conditions déjà mentionnées concernant la période de vibration de l'objet et l'amplitude des déformations, un réseau de strates de diffraction fixe 12, ou hologramme interférométrique est enregistré dans le milieu et la partie 4 du faisceau de référence diffracté par ce réseau et superposée au faisceau objet transmis 5, forme sur la face d'entrée du vidicon 58, l'interférogramme de l'objet vibrant 52. L'image reçue par le détecteur 58 contient un réseau de franges noires fixes, correspondant aux parties vibrantes de l'objet. Ce réseau de franges se superpose à un fond continu représentant l'image de l'objet formée à partir du faisceau objet directement transmis 5. Compte tenu de l'amplification par couplage d'ondes le long de l'épaisseur du cristal du faisceau diffracté 4, le contraste entre l'interférogramme et le fond continu est suffisant pour détecter en transmission directe, ce qui n'était pas le cas du dispositif précédent décrit dans la demande FR-A-2 385 079 où il fallait, soit obturer le faisceau objet pendant la lecture de l'interférogramme, soit opérer par rétroréflexion et séparer par une lame semitransparente le faisceau porteur de l'interférogramme du faisceau objet principal.

La mise en œuvre du couplage d'onde dans un cristal épais électrooptique photosensible permet donc la réalisation d'un dispositif d'interférométrie très simple pour l'étude des structures vibrantes ou déformables.

Ce dispositif dont le schéma de base vient d'être décrit à l'aide de la figure 5, se prête à de multiples variantes, et, à titre d'exemple, on en décrit trois ci-après.

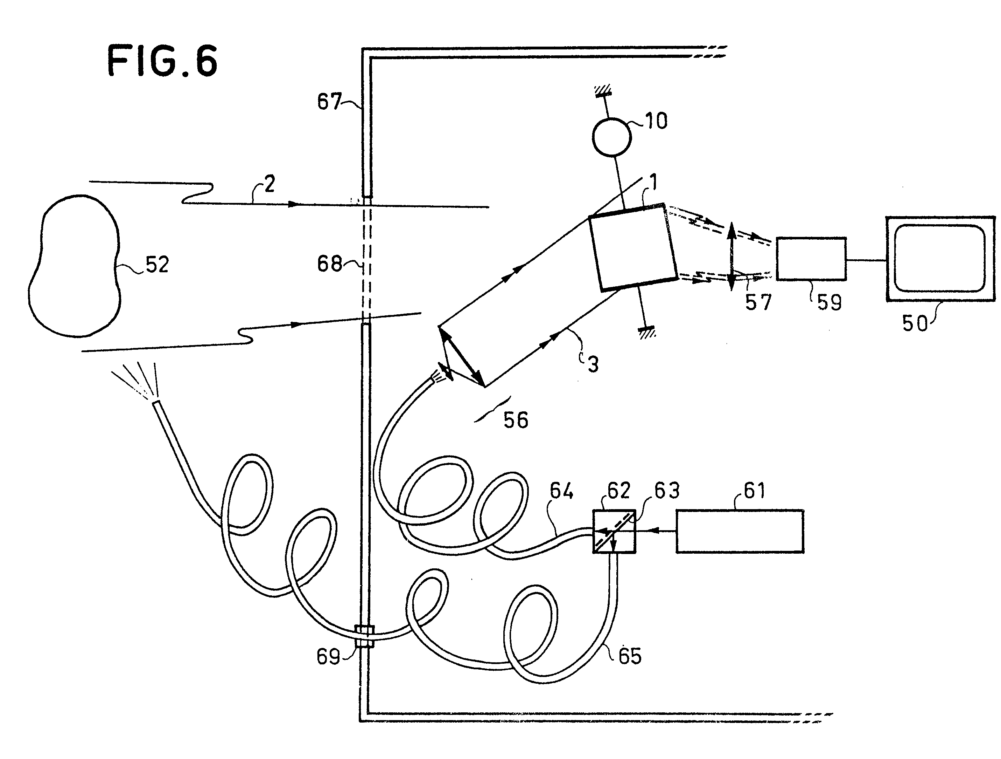

Une première variante de ce dispositif est représentée sur la figure 6.

Pour permettre l'étude des vibrations d'un objet placé dans un environnement non compatible avec l'utilisation d'un dispositif optique de mesure, il est prévu d'éclairer l'objet à l'aide d'une fibre optique, ce qui permet d'éloigner le dispositif de l'objet, ou de le placer dans une enceinte où règne une atmosphère appropriée.

Cette variante possède les caractéristiques principales du dispositif précédemment décrit. La différence essentielle réside dans le mode d'éclairage de l'objet et d'obtention du faisceau de référence. Toute l'énergie lumineuse mise en œuvre dans le fonctionnement du dispositif est fournie par un laser 61. Le faisceau émis par ce laser 61 est séparé en deux et couplé à deux fibres optiques 64 et 65 par l'intermédiaire des moyens de couplage 62, comprenant par exemple une lame semi-transparente 63. La fibre 65 est destinée à éclairer l'objet vibrant 52 qui diffuse vers le dispositif le faisceau objet 2. La fibre optique 64 transporte le rayonnement de référence vers la face d'entrée du cristal. Le rayonnement de référence arrive sur le cristal selon un faisceau parallèle de large ouverture après traversée de l'élargisseur de faisceau 56. Le cristal électro-optique photosensible 1, BSO par exemple, est polarisé autour de 10 kV.cm$^{-1}$ par la source de tension 10 dont les deux bornes sont reliées aux électrodes 6 et 7 portées par deux faces parallèles du cristal. A l'intérieur du cristal, et sur toute son épaisseur, les deux faisceaux objet 2 et référence 3 interfèrent. Le réseau de strates d'indice formant l'hologramme interférométrique de l'objet vibrant diffracte une fraction du faisceau de référence selon la trajectoire du faisceau objet directement transmis. L'image de cet hologramme ou interférogramme, est formée sur la face d'entrée du vidicon 59 par l'intermédiaire de la lentille 57. Cette image peut être visualisée sur l'écran 50.

On a représenté sur cette figure 6, le dispositif d'interférométrie à l'intérieur d'une enceinte délimitée par une paroi 67, munie d'une fenêtre 68 permettant le passage du faisceau objet vers le dispositif, et d'un passage 69 pour la fibre optique destinée à éclairer l'objet.

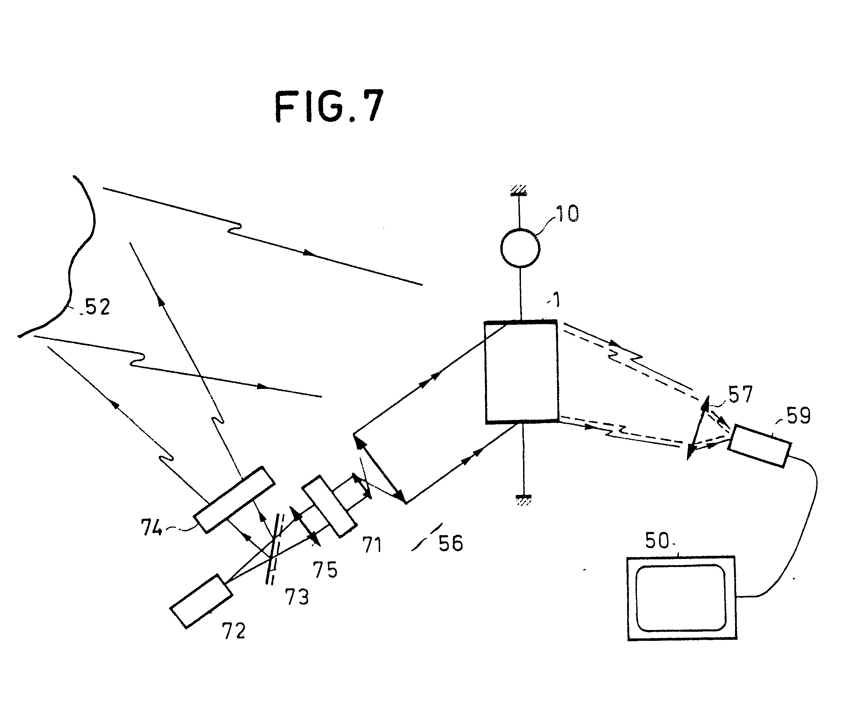

Une autre variante de ce dispositif est représentée sur la figure 7. Selon cette variante, les franges noires observées sur l'interférogramme, correspondent aux parties de l'objet qui ne vibrent pas. Pour cela, on décale en fréquence l'onde de référence d'une quantité égale à la fréquence de vibration de l'objet. L'image restituée comporte alors des franges noires correspondant aux zéros de la fonction de Bessel $Jl^2[(4\pi/\lambda)\Delta e]$.

Le décalage en fréquence est obtenu en disposant sur le trajet du faisceau de référence une cuve acousto-optique 71. Selon cette variante, les rayonnements d'éclairage de l'objet et de référence sont issus d'une même source lumineuse 72, par exemple un laser, et séparés par la lame semi-transparente 73. Le faisceau d'éclairage de l'objet est envoyé vers l'objet par l'intermédiaire du diffuseur 74. L'objet le rediffuse vers le cristal 1. Le faisceau de référence, issu de la lame semi-transparente 73, est collimaté par la lentille 75, glissé en fréquence par la cuve acousto-optique 71, élargi par l'élargisseur de faisceau 56 et envoyé sur le cristal 1. L'établissement de l'hologramme et la visualisation de l'interférogramme se fait selon le procédé décrit précédemment : formation de l'image à l'aide de la lentille 57, sur la face d'entrée du vidicon 59, et visualisation sur l'écran 50.

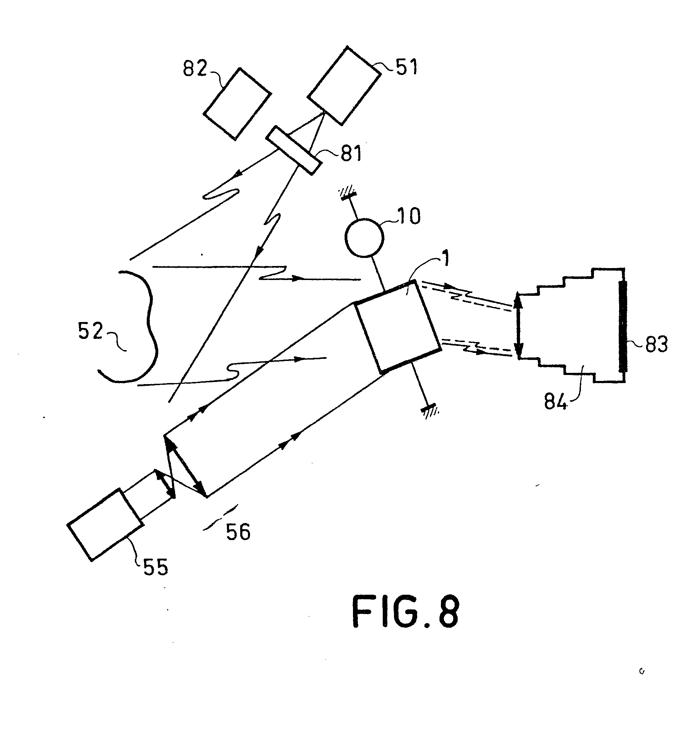

L'utilisation de lumière cohérente dans les dispositifs destinés à fournir des images d'objets présente l'inconvénient du « speckle », c'est-à-dire d'une granularité importante de l'image, le diamètre du grain étant fonction de l'ouverture numérique du dispositif optique formant l'image. L'emploi de matériaux dynamiques, tels que BSO, permet d'intégrer dans le plan de détection, N images dont les « speckles » sont décorrélés, et par la suite d'augmenter le rapport signal sur bruit, proportionnellement à $\sqrt{N}$. Pratiquement, on interpose, sur le trajet du faisceau d'éclairage de l'objet, un diffuseur mobile. Le dispositif représenté sur la figure 8, essentiellement semblable au dispositif d'interférométrie décrit sur la figure 5 comprend sur le trajet du faisceau d'éclairage de l'objet un diffuseur 81, animé par un moteur pas à pas 82, avec N pas.

L'image est formée sur le film sensible 83 d'une caméra polaroïd 84, avec un temps de pose correspondant à N fois le temps $\tau$ d'établissement du couplage d'onde. On obtient ainsi l'interférogramme d'objets de grandes dimensions, en bénéficiant des propriétés de l'optique cohérente pour l'inscription holographique, mais avec une qualité d'image approchant celle de l'optique incohérente.

On peut aussi utiliser ce dispositif pour l'étude d'objets déformables, subissant des déformations aléatoires non périodiques. L'interférogramme n'est plus un réseau de franges fixes dont les caractéristiques sont liées à l'amplitude des déformations, mais il donne néanmoins des informations sur la zone de l'objet qui se déforme.

## Revendications

1. Dispositif d'interférométrie pour la visualisation en temps réel des déformations d'une structure vibrante (52), comprenant un matériau d'enregistrement électro-optique photosensible (1) d'une certaine épaisseur dans lequel est enregistré en volume, en temps réel à une constante de temps près caractéristique du matériau, un hologramme interférométrique composé d'un réseau fixe de strates d'indice (12) de diffraction traversant ladite épaisseur et correspondant aux déformations de cette structure vibrante à partir de l'interférence dans le volume du matériau d'un rayonnement objet incident (2) diffusé par la structure vibrante à partir d'un rayonnement d'éclairage issu d'une source cohérente et d'un rayonnement de référence (3) qui lui est cohérent, et des moyens de visualisation (58) détectant en transmission directe l'hologramme interférométrique de la structure vibrante (52) enregistré dans le matériau (1) sur un faisceau émergeant du matériau, caractérisé en ce que ce faisceau émergeant comprend un faisceau (4) porteur de l'hologramme interférométrique et un faisceau (5) correspondant à la partie du rayonnement objet incident directement transmise à travers l'épaisseur du matériau, et en ce que l'épaisseur est suffisamment grande pour que la détection en transmission directe de l'hologramme interférométrique par les moyens de visualisation (58) soit lisible.

2. Dispositif d'interférométrie selon la revendication 1, caractérisé en ce que le matériau d'enregistrement (1) est un monocristal de BSO, c'est-à-dire d'oxyde de bismuth et de silicium.

3. Dispositif d'interférométrie selon la revendication 1, caractérisé en ce que le matériau d'enregistrement (1) est un monocristal de BGO, c'est-à-dire d'oxyde de bismuth et de germanium.

4. Dispositif d'interférométrie selon l'une quelconque des revendications 2 ou 3, caractérisé en ce que le matériau (1) est polarisé par un champ électrique supérieur ou égal à 10 kV, et orthogonal aux strates d'indice (12).

5. Dispositif d'interférométrie selon la revendication 4, caractérisé en ce que le champ électrique est dirigé selon la normale aux faces 001 du monocristal, la face d'entrée des rayonnements dans le cristal étant une face 110 ou une face 1̄10.

6. Dispositif d'interférométrie selon l'une quelconque des revendications 1 à 5, caractérisé en ce que les moyens de visualisation de l'hologramme interférométrique comprennent un vidicon (59) transmettant l'image sur un écran de visualisation (50).

7. Dispositif d'interférométrie selon l'une quelconque des revendications 1 à 5, caractérisé en ce que les moyens de visualisation de l'hologramme interférométrique comprennent une caméra de type polaroïd (84).

8. Dispositif d'interférométrie selon l'une quelconque des revendications 1 à 7, caractérisé en ce que les rayonnements d'éclairage et de référence (3) sont transportés par les fibres optiques (64, 65).

9. Dispositif d'interférométrie selon l'une quelconque des revendications 1 à 8, caractérisé en ce qu'il comprend en outre un dispositif acousto-optique (71) disposé sur le trajet du rayonnement de référence, et destiné à fournir un rayonnement de référence décalé en fréquence, par rapport au rayonnement d'éclairage, d'une fréquence égale ou multiple de la fréquence de vibration de la structure vibrante.

10. Dispositif d'interférométrie selon l'une quelconque des revendications 1 à 9, caractérisé en ce qu'il comprend en outre un diffuseur (81) tournant au travers duquel passe le rayonnement d'éclairage pendant un temps suffisant par rapport à la constante de temps du matériau pour éliminer le speckle dû à l'utilisation de rayonnements cohérents.

## Claims

1. An interferometric device for the real time display of the deformations of a vibrating structure (52), comprising a photosensitive electrooptical recording material (1) of a certain thickness in which is recorded in volume and in real time, to within a time constant characteristic of the material, an interferometric hologram constituted by a fixed network of diffraction index layers (12) corresponding to the deformations of this vibrating structure, as a result of the interference in the volume of the material between an incident object radiation (2) diffused by the vibrating structure from an illuminating radiation emitted by a coherent source, and a reference radiation (3) coherent thereto, and comprising display means (58) which detect in the direct transmission mode the interferometric hologram of the vibrating structure (52) recorded in the material (1) on a beam emerging from the material, characterized in that the emerging beam comprises a beam (4) bearing the interferometric hologram and a beam (5) corresponding to that fraction of the incident object radiation which is directly transmitted through the thickness of the material, and that the thickness is sufficiently great so as to render readable the detection of the interferometric hologram by the display means (58) in the direct transmission mode.

2. An interferometric device according to claim 1, characterized in that the recording material (1) is a bismuth and silicon oxide (BSO) monocrystal.

3. An interferometric device according to claim 1, characterized in that the recording material (1) is a bismuth and germanium oxide (BGO) monocrystal.

4. An interferometric device according to any one of claims 2 or 3, characterized in that the recording material (1) is polarized by an electric field equal to or above 10 kV and orthogonal to the index layers (12).

5. An interferometric device according to claim 4, characterized in that the electric field is directed in accordance with the normal to the faces 001 of the monocrystal, the entry face of the radiation into the crystal being a face 110 or a face $\bar{1}$10.

6. An interferometric device according to any one of claims 1 to 5, characterized in that the means for displaying the interferometric hologram comprise a vidicon (59) transmitting the image onto a display screen (50).

7. An interferometric device according to any one of the preceding claims, characterized in that the means for displaying the interferometric hologram comprise a polaroid type camera (84).

8. An interferometric device according to any one of claims 1 to 7, characterized in that the object illumination and reference beams (3) are carried by optical fibres (64, 65).

9. An interferometric device according to any one of claims 1 to 8, characterized in that it further comprises an acoustooptical device (71) positioned on the reference radiation path and serving to supply a reference beam which is frequency-shifted relative to the object illumination beam by a frequency equal to or a multiple of the vibration frequency of the vibrating structure.

10. An interferometric device according to any one of claims 1 to 9, characterized in that it further comprises a rotating diffuser (81) through which passes the object illumination beam during a time adequate relative to the time constant of the material to eliminate the speckle resulting from the use of coherent beams.

## Ansprüche

1. Interferometrische Einrichtung zur Sichtbarmachung der Verformungen einer vibrierenden Struktur (52) in Echtzeit, mit einem lichtempfindlichen elektrooptischen Registriermaterial (1) einer gewissen Dicke, in dessen Volumen ein interferometrisches Hologramm in Echtzeit, abgesehen von einer für das Material charakteristischen Zeitkonstante, registriert wird, wobei dieses Hologramm aus einem festen Netz von Brechungsindexschichten (12) besteht, die die Dicke durchqueren und den Verformungen der vibrierenden Struktur entsprechen, aufgrund der Interferenz im Volumen des Materials zwischen einer einfallenden Objektstrahlung (2), die von der vibrierenden Struktur ausgehend von einer von einer kohärenten Lichtquelle stammenden Strahlung diffundiert wird, und einer zur Lichtquelle kohärenten Referenzstrahlung (3), und mit Mitteln (58) zur Sichtbarmachung, die in direkter Übertragung das in dem Material (1) registrierte interferometrische Hologramm der vibrierenden Struktur auf einem aus diesem Material austretenden Strahl entdecken, dadurch gekennzeichnet, daß dieser austretende Strahl einen Strahl (4), der das interferometrische Hologramm trägt, und einen Strahl (5) enthält, der dem Teil der einfallenden Objektstrahlung entspricht, der direkt durch die Dicke des Materials übertragen wird, und daß die Dicke ausreichend groß ist, damit die Entdeckung des interferometrischen Hologramms in direkter Übertragung durch die Mittel (58) zur Sichtbarmachung lesbar ist.

2. Interferometrische Einrichtung nach Anspruch 1, dadurch gekennzeichnet, daß das Material (1) für die Registrierung ein BSO-Monokristall ist, d. h. ein Wismuth-Silizium-Oxid-Monokristall ist.

3. Interferometrische Einrichtung nach Anspruch 1, dadurch gekennzeichnet, daß das Material (1) zur Registrierung ein BGO-Monokristall ist, d. h. ein Wismuth-Germanium-Oxid-Monokristall.

4. Interferometrische Einrichtung nach einem beliebigen der Ansprüche 2 oder 3, dadurch gekennzeichnet, daß das Material (1) einem elektrischen Feld unterliegt, das größer oder gleich 10 kV ist und senkrecht zu den Indexschichten (12) verläuft.

5. Interferometrische Einrichtung nach Anspruch 4, dadurch gekennzeichnet, daß das elektrische Feld senkrecht auf den 001-Seiten des Monokristalls steht, wobei die Strahlung in den Kristall durch eine 110-Seite oder eine $\bar{1}$10-Seite eintritt.

6. Interferometrische Einrichtung nach einem beliebigen der Ansprüche 1 bis 5, dadurch gekennzeichnet, daß die Mittel zur Sichtbarmachung des interferometrischen Hologramms eine Vidiconröhre (59) aufweisen, die das Bild auf einen Bildschirm (50) wirft.

7. Interferometrische Einrichtung nach einem beliebigen der Ansprüche 1 bis 5, dadurch gekennzeichnet, daß die Mittel zur Sichtbarmachung des interferometrischen Hologramms eine Kamera vom Polaroid-Typ (84) aufweisen.

8. Interferometrische Einrichtung nach einem beliebigen der Ansprüche 1 bis 7, dadurch gekennzeichnet, daß die Strahlungen der Lichtquelle und die Referenzstrahlung (3) durch Lichtleitfasern (64, 65) befördert werden.

9. Interferometrische Vorrichtung nach einem beliebigen der Ansprüche 1 bis 8, dadurch gekennzeichnet, daß sie außerdem eine akustooptische Vorrichtung (71) aufweist, die sich im Verlauf der Referenzstrahlung befindet und dazu bestimmt ist, eine Referenzstrahlung zu liefern, die frequenzmäßig bezüglich der von der Lichtquelle stammenden Strahlung um eine Frequenz verschoben ist, die gleich der Vibrationsfrequenz der vibrierenden Struktur oder ein Vielfaches davon ist.

10. Interferometrische Vorrichtung nach einem beliebigen der Ansprüche 1 bis 9, dadurch gekennzeichnet, daß sie außerdem einen drehenden Diffusor (81) aufweist, durch den die von der Lichtquelle stammende Strahlung während einer Zeit hindurchtritt, die hinreichend groß bezüglich der Zeitkonstante des Materials ist, um die Körnung aufgrund der Verwendung kohärenter Strahlen zu eliminieren.

0 053 052

FIG.1

FIG.2

FIG.3

Intensité

1

FIG.5

FIG.4

FIG.6

# FIG.7

FIG.8